# EUROPÄISCHE PATENTSCHRIFT

(11) **EP 3 548 732 B1**
(45) Veröffentlichungstag und Bekanntmachung des Hinweises auf die Patenterteilung: **09.11.2022**
(21) Anmeldenummer: 17777813.1
(22) Anmeldetag: 18.09.2017
(51) Int. Cl.: F03D 1/06

(54) **ROTORBLATT FÜR EINE WINDENERGIEANLAGE UND WINDENERGIEANLAGE**
ROTOR BLADE FOR A WIND TURBINE AND WIND TURBINE
PALE D'ÉOLIENNE ET ÉOLIENNE

(30) Priorität: 05.12.2016 DE 102016123412
(43) Veröffentlichungstag der Anmeldung: 09.10.2019
(73) Patentinhaber: Wobben Properties GmbH, 26607 Aurich (DE)
(72) Erfinder: KRUSE, Marcel, 27616 Beverstedt (DE); SPIETH, Falk, 26603 Aurich (DE)
(74) Vertreter: Eisenführ Speiser
(86) Internationale Anmeldenummer: PCT/EP2017/073490
(87) Internationale Veröffentlichungsnummer: WO 2018/103904

(56) Entgegenhaltungen:
- EP-A1- 2 053 240
- EP-A1- 2 998 571
- EP-A1- 3 098 436
- WO-A2-2014/064626
- DE-A1-102011 050 661

## Beschreibung

Die Erfindung bezieht sich auf ein Rotorblatt für eine Windenergieanlage, mit einem Innenblattabschnitt, der sich ausgehend von einer Rotorblattwurzel in Längsrichtung des Rotorblattes erstreckt, einem an dem Innenblattabschnitt angeordneten Hinterkantensegment zur Vergrößerung der Profiltiefe des Rotorblattes entlang eines Abschnittes in Rotorblatt-Längsrichtung, wobei das Rotorblatt eine druckseitige Fläche und eine saugseitige Fläche aufweist, die jeweils bereichsweise aus Teilen des Innenblattabschnittes und des Hinterkantensegmentes ausgebildet sind. Weiterhin bezieht sich die Erfindung auf eine Windenergieanlage mit einem Turm, einer Gondel und einem Rotor sowie auf einen Windpark.

Im Stand der Technik ist es bekannt, die Effizienz einer Windenergieanlage über das Design der Rotorblätter an einer Windenergieanlage zu verbessern. Eine Möglichkeit die Effizienz bzw. Leistungsfähigkeit der Windenergieanlage zu steigern, ist das Profil des Rotorblattes im Bereich der Rotorblattwurzel mit großer Profiltiefe auszugestalten. Die Profiltiefe, unter der im Folgenden die Länge des Profils im Wesentlichen senkrecht zur Rotorblattlängsrichtung, also der Abstand zwischen einer Profilnase und einer Profilhinterkante des Rotorblattes verstanden wird, ist dazu möglichst groß auszuführen. Die Rotorblattwurzel bezeichnet den Bereich des Rotorblattes, mit dem das Rotorblatt an der Rotornabe der Windenergieanlage befestigt wird. Häufig liegt die maximale Profiltiefe bei einem solchen Rotorblatt sehr nahe der Rotorblattwurzel. Damit werden Wirbelerzeugungen reduziert und die Effizienz der Windenergieanlage gesteigert.

Eine weitere Möglichkeit der Effizienzsteigerung besteht in einer Grenzschichtbeeinflussung, die aufgrund der zunehmenden Profiltiefen immer mehr an Bedeutung erlangt. Auf der Saugseite des Rotorblattes läuft, aufgrund der im allgemeinen konvexen Wölbung der saugseitigen Fläche, die Luftströmung nach Passieren der maximalen Wölbung im hinteren Bereich des Rotorblattprofils gegen einen Druckgradienten. Das bewirkt eine Verlangsamung der Luftströmung, wodurch die Grenzschicht kinetische Energie verliert. Unter Umständen hat die Verlangsamung der Luftströmung zur Folge, dass sich die Grenzschicht von der Oberfläche des Rotorblattes beginnt abzulösen. Eine von der Rotorblattoberfläche abgelöste Strömung hat Turbulenzen zur Folge, wodurch der auf der Saugseite produzierte Auftrieb absinkt und sich damit der Widerstand erhöht. Mit der Grenzschichtbeeinflussung soll insbesondere das Ablösen der Luftströmung von der Oberfläche des Rotorblattes vermieden werden.

Aus dem Stand der Technik, wie beispielsweise der DE 10 2011 050 661 A1 ist es bekannt, die Hinterkante im Wurzelbereich des Rotorblattes stumpf auszubilden. Im Bereich der Hinterkante wird eine Grenzschichtabsaugung in Form einer Reihe von entlang der Hinterkante verlaufenden Bohrungen vorgesehen. Über einen innerhalb des Rotorblattes in Längsrichtung verlaufenden Luftleitkanal wird die abgesaugte Luft von der Blattwurzel in Richtung der Blattspitze transportiert und über einen Ausblasbereich an der Hinterkante der Blattspitze abgegeben. Diese Anordnung ist umständlich und erfordert sowohl das Vorsehen technisch komplexer Lufteinlässe an der Hinterkante, die leicht die Stabilität gefährden, sowie das Bereitstellen von wenigstens einem Luftleitkanal. Außerdem erfolgt die Grenzschichtbeeinflussung nicht an dem Punkt der Druck- bzw. Saugseite, an dem ein Ablösen der Grenzschicht auftritt.

WO 2016/045656 A1 betrifft ein Windenergieanlagenrotorblatt aufweisend eine Oberseite, eine Unterseite, eine Vorderkante, eine Hinterkante, eine Nabenbefestigung und eine Blattspitze, wobei das Windenergieanlagenrotorblatt in einen Nabenbereich, einen Mittelbereich und einen Blattspitzenbereich eingeteilt und ein Wurzelbereich von der Nabenbefestigung bis zur maximalen Blatttiefe (Smax) definiert ist, wobei innerhalb des Windenergieanlagenrotorblattes ein radial nach außen verlaufender Luftleitkanal zur Leitung von abgesaugter Luft aus einem Absaugbereich zu einem im Blattspitzenbereich angeordneten Ausblasbereich vorgesehen ist und eine Grenzschichtabsaugung erfolgt, wobei die Absaugung der Luft auf der Oberseite des Windenergieanlagenrotorblattes erfolgt und ein Grenzschichtzaun im Nabenbereich nahe der Nabenbefestigung zur Verhinderung einer Strömung in Richtung Nabenbefestigung vorgesehen ist.

EP 2 053 240 A1 offenbart eine Windkraftanlage, enthaltend einen Rotor mit einer Nabe und Rotorblättern und ferner enthaltend ein Grenzschichtsteuerungssystem für die Rotorblätter, wobei eine Vielzahl von Druckkammern über die Länge des Blattes verteilt in dem Blatt angeordnet ist, wobei jede Druckkammer durch eine oder mehrere entsprechende Öffnungen in der äußeren Oberfläche des Rotorblatts mit der Außenseite des Blattes in Verbindung steht, wobei ferner ein Saugkanal und ein Blaskanal im Inneren des Blattes verlaufen, um der Druckkammer einen Unterdruck bzw. einen Überdruck zuzuführen, wobei jede Druckkammer mit mindestens einem der Kanäle durch einen Luftkanal verbunden ist, in welchem ein aktiv betätigbares Ventil angeordnet ist, welches mit einer Steuereinheit verbunden ist, um die Druckkammer selektiv mit dem Kanal bzw. den Kanälen in Verbindung zu setzen oder von diesen zu trennen, um so durch die entsprechende(n) Öffnung(en) in der Blattoberfläche aus der Druckkammer Luft auszublasen oder Luft in die Druckkammer anzusaugen.

WO 2007/035758 A1 offenbart ein Blatt (wie ein Windturbinenblatt), das so ausgestaltet ist, dass es angrenzend an eine drehbare Nabe befestigt ist, wobei das Blatt: einen Fluideinlass definiert, der angrenzend an einen proximalen Abschnitt des Blattes angeordnet ist; einen Fluidauslass, der angrenzend an einen distalen Abschnitt des Blattes angeordnet ist; und einen Zentrifugalströmungskanal, der sich innerhalb eines inneren Teils des Blattes zwischen dem Fluideinlass und dem Fluidauslass erstreckt. Der Fluideinlass ist vorzugsweise in gasförmiger Verbindung mit dem Fluidauslass über den Zentrifugalströmungskanal und das Blatt ist so konfiguriert, dass, wenn das Blatt um die Nabe mit einer bestimmten Geschwindigkeit gedreht wird, Fluid, das in den Fluideinlass gezogen wird, durch den Zentrifugalströmungskanal und aus dem Fluidauslass ausgestoßen wird. Das Fluid wird vorzugsweise komprimiert, wenn es sich durch den Zentrifugalströmungskanal bewegt.

WO 2009/144356 A1 offenbart ein Windgeneratorblatt mit hypertragenden Elementen an der Vorderkante und/oder an der Hinterkante (letztere mit hoher relativer Dicke), die sich in der Wurzelzone befinden, um so das aerodynamische Verhalten und damit die Menge an Energie, die aus dem Wind im Vergleich zu herkömmlichen Blättern mit einem zylindrischen oder ovalen Wurzelbereich, zu verbessern.

WO 2014/064626 A2 offenbart ein Rotorblatt mit einem aerodynamischen Anhang, der in der Nähe der Rotornabe auf dem Rotorblatt befestigt ist. Der aerodynamische Anhang enthält Leitungskanäle, von denen jeder eine Druckseite mit einer Saugseite verbindet und die in Flussrichtung parallel zueinander angeordnet sind. Bevorzugt nimmt der Querschnitt jedes Leitungskanals in Flussrichtung ab, um den Fluss zu beschleunigen, d.h., jeder Leitungskanal läuft spitz auf die Saugseite zu.

Der Erfindung liegt die Aufgabe zugrunde, ein Rotorblatt der vorbezeichneten Gattung dahingehend zu verbessern, dass eine effizientere Grenzschichtbeeinflussung erreicht ist.

Die Erfindung löst die ihr zugrundeliegende Aufgabe bei einem Rotorblatt für eine Windenergieanlage mit den Merkmalen nach Anspruch 1. Insbesondere ist auf der druckseitigen und/oder saugseitigen Fläche des Rotorblattes unmittelbar im Übergangsbereich vom Innenblattabschnitt zum Hinterkantensegment wenigstens ein sich im Wesentlichen in Rotorblatt-Längsrichtung erstreckender schlitzartiger Lufteinlass und/oder Luftauslass ausgebildet.

Die Erfindung macht sich hierbei die Erkenntnis zunutze, das mit Hilfe eines schlitzartigen Luftein- bzw. Luftauslasses auf der druckseitigen und/oder saugseitigen Fläche des Rotorblattes zumindest ein Absaug- oder Ausblasbereich ausgebildet ist, mit dem eine in Richtung der Profiltiefe des Rotorblattes strömende Grenzschicht vorteilhaft beeinflusst wird. Im Vergleich zu einer Grenzschichtabsaugung im Bereich der Hinterkante eines Hinterkantensegmentes wird die Luftströmung in dem Bereich des Rotorblattes beeinflusst, in dem sie den größten Effekt erzielt. Zudem ist im Gegensatz zu den bekannten Bohrungen mit der erfindungsgemäßen Ausgestaltung des Lufteinlasses oder Luftauslasses als Schlitz oder Spalt eine vergrößerte Saug- oder Ausblaswirkung auf die vorbeiströmende Grenzschicht der Luftströmung bewirkt. Überdies sind keine Bohrungen oder strukturellen Veränderungen an dem Innenblattabschnitt erforderlich, die Stabilitätsprobleme verursachen können.

Unter einem schlitzartigen Lufteinlass und/oder Luftauslass ist ein Schlitz oder Spalt in der Oberfläche des Rotorblattes auf dessen druckseitiger oder saugseitiger Fläche zu verstehen, dessen Abmessung in Rotorblatt-Längsrichtung größer ist als in Richtung der Profiltiefe. Bevorzugt sind die Abmessungen der Lufteinlässe und/oder Luftauslässe in Rotorblatt-Längsrichtung um ein Vielfaches größer als in Richtung der Profiltiefe. In einer Ausführungsform ist die Abmessung in Rotorblatt-Längsrichtung mindestens zweimal so groß wie die Abmessung in Richtung der Profiltiefe. In einer anderen Ausführungsform ist die Abmessung in Rotorblatt-Längsrichtung mindestens 10 mal größer, insbesondere mindestens 20 mal größer, besonders bevorzugt mindestens 50 mal größer als die Abmessung in Richtung der Profiltiefe.

In einer bevorzugten Weiterbildung der Erfindung ist auf der druckseitigen und saugseitigen Fläche des Rotorblattes jeweils wenigstens ein schlitzartiger Lufteinlass und/oder Luftauslass angeordnet. Damit ist eine Grenzschichtbeeinflussung sowohl auf der druckseitigen als auch saugseitigen Fläche des Rotorblattes erreicht. Die Ausgestaltung eines Lufteinlasses oder Luftauslasses in Form eines Schlitzes oder Spaltes im Bereich des Hinterkantensegmentes ist möglich, da die im Bereich der Blattwurzel auf das Rotorblatt wirkenden Kräfte hauptsächlich auf den Innenblattabschnitt des Rotorblattes wirken, welcher jedoch keine strukturelle Beeinträchtigung durch die Schlitze oder Spalte im Hinterkantensegment aufweist. Ein Lufteinlass oder Luftauslass kann aus einzigem Schlitz oder Spalt ausgebildet sein. In einer anderen Ausführungsform ist ein Lufteinlass oder Luftauslass aus mehreren Einzelschlitzen oder -spalten auf der Oberfläche des Rotorblattes ausgebildet. Diese sind vorzugsweise in einer Linie in etwa in Rotorblatt-Längsrichtung verlaufend nebeneinander angeordnet.

Jeder Lufteinlass und/oder Luftauslass ist unmittelbar im Übergangsbereich vom Innenblattabschnitt zum Hinterkantensegment ausgebildet. Die einen Bereich der saugseitigen Fläche ausbildende Oberseite und die einen Bereich der druckseitigen Fläche des Rotorblattes ausbildende Unterseite des Hinterkantensegmentes werden zum Innenblattabschnitt hin auf einfache Weise verkürzt ausgebildet. Dadurch entsteht eine Unterbrechung in der saugseitigen und druckseitigen Fläche des Rotorblattes durch eine am Innenblattabschnitt zurückspringende Kante an Ober- und Unterseite des Hinterkantensegmentes. Beim Ansetzen des Hinterkantensegmentes an den Innenblattabschnitt sind die Kanten von Ober- und Unterseite des Hinterkantensegmentes somit im Abstand zu einem jeweils zugeordneten Bereich des Innenblattabschnittes angeordnet. In einer anderen Ausgestaltung sind nur Lufteinlässe oder Luftauslässe an der saugseitigen und druckseitigen Fläche vorgesehen.

Vorzugsweise sind der Lufteinlass auf der druckseitigen Fläche des Rotorblattes und der Luftauslass auf der saugseitigen Fläche des Rotorblattes angeordnet. Lufteinlass und Luftauslass, welche vorzugsweise fluidleitend miteinander gekoppelt sind, sind somit auf voneinander abgewandten Seiten des Rotorblattes angeordnet. Im Betrieb der Windenergieanlage entsteht bevorzugt eine selbsttätig strömende Luftströmung, auch bezeichnet als Ausgleichsströmung, vom Lufteinlass auf der Druckseite zum Luftauslass auf der Saugseite des Rotorblattes. Der Lufteinlass und der Luftauslass sind am Rotorblatt derart angeordnet und dazu eingerichtet, dass bei Drehung des Rotors und den sich damit einstellenden Druckverhältnissen eine "natürliche" Ausgleichsströmung vom Lufteinlass durch das Hinterkantensegment, auch bezeichnet als Hinterkasten, zum Luftauslass erzeugt wird. Unter einer selbsttätigen Luftströmung ist vorliegend das Entstehen einer Luftströmung vom Lufteinlass zum Luftauslass allein aufgrund der Fliehkraft bzw. der Drehbewegung des Rotors und der daran angeordneten Rotorblätter ohne die Verwendung etwaiger das Erzeugen einer erzwungenen Strömung unterstützender Komponenten und Geräten zu verstehen.

Vorzugsweise erstreckt sich der Lufteinlass und/oder Luftauslass im Wesentlichen über die gesamte Länge des Hinterkantensegmentes. Damit ist bevorzugt ein Spalt oder Schlitz zumindest in den Flächen des Rotorblattes in Rotorblatt-Längsrichtung ausgebildet, entlang dem sich das Hinterkantensegment erstreckt. Ein solcher schlitzartiger Lufteinlass und/oder Luftauslass wird in einer Ausführungsform aus mehreren in Rotorblatt-Längsrichtung nebeneinander angeordneten Einzelschlitzen oder -spalten ausgebildet. In einer anderen Ausgestaltung weisen jeweils unmittelbar zueinander benachbarte Schlitze oder Spalte einen Versatz in Richtung der Profiltiefe auf. Jedoch verläuft die gesamte Anzahl an Schlitzen oder Spalten über die Gesamtlänge eines solchen Lufteinlasses oder Luftauslasses jeweils im Wesentlichen in Rotorblatt-Längsrichtung. Die versetzt zueinander angeordneten Spalte oder Schlitze weisen einander überlagernde bzw. überdeckende Endbereiche auf, wären die einzelnen Schlitze bzw. Spalte in einer Reihe deckungsgleich angeordnet. In anderen Ausführungsformen sind auch andere Anordnungen von Schlitzen, beispielsweise parallele unter einem Winkel zur Rotorblatt-Längsrichtung stehende Schlitze, möglich.

Vorzugsweise ist in einer Ausführungsform der Erfindung das Hinterkantensegment derart am Innenblattabschnitt angeordnet, dass am Lufteinlass und/oder Luftauslass ein Lufteintritts- bzw. Luftaustrittskanal für eine gerichtete Luftströmung ausgebildet ist. Vorzugsweise ist im Falle von mehreren Einzelschlitzen jeder einzelne Spalt oder Schlitz eines Lufteinlasses und/oder Luftauslasses mit einem Lufteintrittskanal oder einem Luftaustrittskanal ausgerüstet. Entsprechende Lufteintritts- und Luftaustrittskanäle am Rotorblatt sind bevorzugt jeweils über einen separaten Luftleitkanal miteinander verbunden. Mittels des Luftleitkanals erfolgt das Überleiten der an der druckseitigen Fläche abgeführten Luft in Richtung des Luftauslasses an der saugseitigen Fläche des Rotorblattes. Der Luftleitkanal, der den Lufteintrittskanal und der Luftaustrittskanal miteinander koppelt, verläuft im Wesentlichen quer zur Rotorblatt-Längsrichtung. Vorzugsweise weist jeder Lufteintritts- und/oder Luftaustrittkanal Leitelemente, wie beispielsweise Leitbleche im Bereich eines jeweiligen Lufteinlasses oder Luftauslasses auf, wodurch das gerichtete Führen des das Hinterkantensegment durchströmenden Luftstromes weiter verbessert wird.

In einer Ausführungsform verläuft der Luftleitkanal nicht senkrecht auf dem Profil des Rotorblattes bzw. quer zur Rotorblatt-Längsrichtung, sondern zumindest teilweise radial nach außen, das heißt in der Richtung von der Blattwurzel zur Rotorblattspitze. Durch die Komponente in Radialrichtung wirkt während einer Drehung des Rotors auf die Luft in dem Luftleitkanal eine Fliehkraft, die ein gerichtetes Führen der in dem Luftleitkanal befindlichen Luft bewirkt.

In einer bevorzugten Weiterbildung des erfindungsgemäßen Rotorblattes sind der Lufteintritts- bzw. Luftaustrittskanal dazu eingerichtet, die Luftströmung im Bereich des Lufteinlasses und/oder Luftauslasses im Wesentlichen parallel zur jeweils angrenzenden äußeren Oberfläche des Innenblattabschnittes umzulenken. An der saugseitigen Fläche des Rotorblattes wird bevorzugt in Richtung der Profiltiefe des Rotorblattes strömenden Grenzschicht eine zusätzliche Luftströmung turbolenzfrei ausgeblasen. Über den Luftaustrittskanal erfolgt bevorzugt das Abgeben bzw. Ausblasen der Luftströmung vorzugsweise in Richtung der entlang der saugseitigen Fläche des Rotorblattes strömenden Luftströmung. Damit wird die Grenzschicht auf der sauseitigen Fläche des Rotorblattes auf vereinfachte Weise beeinflusst. In einer Ausführungsform der Erfindung wird an der druckseitigen Fläche des Rotorblattes die Luftströmung in Strömungsrichtung abgesaugt.

In einer weiteren Ausbildung erfolgt die Beeinflussung der Grenzschichten genau in umgekehrter Richtung, nämlich wird die Grenzschicht auf der saugseitigen Fläche, die im Begriff ist sich abzulösen, über den Lufteinlasskanal abgesaugt und entsprechend entlang an der druckseitigen Fläche abgegeben. Die Luftführung muss in dieser Ausbildung durch geeignete Mittel dem natürlichen Druckgefälle entgegen gewährleistet sein.

Ferner weist der Lufteintritts- bzw. Luftaustrittskanal bevorzugt am Lufteinlass und/oder Luftauslass in Strömungsrichtung der die Kanäle durchströmenden Luftströmung einen sich erweiternden oder verengenden Querschnitt auf. In einer Ausführungsform der Erfindung weist der Innenblattabschnitt vorzugsweise einen etwa ringförmigen oder ellipsenförmigen Querschnitt auf. Die Form des Querschnittes ist dabei bevorzugt abhängig vom Abstand des Innenblattabschnittes zur Rotorblattwurzel des Rotorblattes. Im Nahbereich zur Blattwurzel weist der Innenblattabschnitt bevorzugt einen an eine Ringform angenäherten Querschnitt auf. Je größer der Abstand von der Blattwurzel, desto mehr verändert sich der Querschnitt des Innenblattabschnittes zu einer Ellipsenform.

Eine weitere Ausgestaltung des erfindungsgemäßen Rotorblattes sieht vor, dass das Rotorblatt einen Ventilator oder Verdichter aufweist, wobei der Lufteinlass und der Luftauslass am Rotorblatt fluidleitend mit dem Ventilator oder Verdichter für eine zwangsbewegte Luftführung durch zumindest das Hinterkantensegment kommunizieren. Der Ventilator oder Verdichter ist insbesondere dazu eingerichtet, die "natürliche" Ausgleichsströmung von der druckseitigen Fläche in Richtung der saugseitigen Fläche zu unterstützen oder gar die Luftströmung in die entgegengesetzte Richtung umzukehren. Unter Zuhilfenahme des Ventilators oder Verdichters am Rotorblatt ist es möglich, eine Luftströmung von der saugseitigen Fläche in Richtung der druckseitigen Fläche des Rotorblattes zu erzeugen. Mit Hilfe des Ventilators oder Verdichters erfolgt eine Zwangsführung der Luftströmung im Hinterkantensegment im Wesentlichen parallel zur Profiltiefe des Rotorblattes. Die Luft strömt somit senkrecht zur Rotorblatt-Längsrichtung. In einer Ausgestaltung der Erfindung ist vorgesehen, dass die Luftströmung innerhalb des Hinterkantensegmentes alternativ oder optional über einen Abschnitt des Rotorblattes in Rotorblatt-Längsrichtung strömt. Das heißt, die Luftströmung strömt mindestens abschnittsweise von der Blattwurzel in Richtung Blattspitze und/oder in entgegengesetzter Richtung.

In einer Ausgestaltung des erfindungsgemäßen Rotorblattes ist der Ventilator oder Verdichter im Innenblattabschnitt des Rotorblattes angeordnet, wobei vorzugsweise der Innenblattabschnitt in seinem Strukturkörper Luftdurchtrittsöffnungen und/oder Luftleitkanäle für die fluidleitende Verbindung zwischen dem Ventilator oder dem Verdichter und dem Lufteinlass und/oder Luftauslass aufweist. Insbesondere ein im Innenblattabschnitt des Rotorblattes angeordneter Ventilator oder Verdichter, mittels dem die Rotorblattbeheizung erfolgt, kann optional dazu ausgebildet sein, neben dem Beheizen des Rotorblattes die Luftströmung vom Lufteinlass in Richtung des Luftauslasses des Hinterkantensegmentes zu ermöglichen. Der Lufteinlass am Rotorblattabschnitt ist vorzugsweise mit der Saugseite des Ventilators oder Verdichters und der Luftauslass mit der Druckseite des Ventilators oder Verdichters fluidleitend, insbesondere luftleitend, verbunden. Für die fluidleitende Verbindung des im Innenblattabschnitt angeordneten Ventilators oder Verdichters mit dem Lufteinlass und dem Luftauslass am Hinterkantensegment sind ein oder mehrere Luftdurchtrittsöffnungen bzw. Luftleitkanäle vorgesehen, welche den Strukturkörper des Innenblattabschnittes mit seinem vorzugsweise ringförmigen oder ellipsenförmigen Querschnitt durchdringen. Vorliegend weist das Rotorblatt Luftleitkanäle auf, welche eine Zwangsführung der strömenden Luft sowohl in Rotorblatt-Längsrichtung als auch quer zur Rotorblatt-Längsrichtung umsetzen.

Eine Ausgestaltung des erfindungsgemäßen Rotorblattes sieht vor, dass ein Ventilator oder Verdichter im Hinterkantensegment des Rotorblattes angeordnet ist. Damit ist die konstruktive Ausgestaltung des Innenblattabschnittes sowie die Luftführung zwischen dem Lufteinlass und dem Luftauslass am Hinterkantensegment vereinfacht. Anstelle von möglichen Luftdurchtrittsöffnungen und/oder Luftleitkanälen, welche den Strukturkörper des Innenblattabschnittes schwächen, ist nur eine relativ kleine Öffnung im Strukturkörper für die Energieversorgung des im Hinterkantensegment des Rotorblattes angeordneten Ventilators oder Verdichters vorgesehen. Der im Hinterkantensegment des Rotorblattes angeordnete Ventilator oder Verdichter ist mit seiner Saugseite mit dem Lufteinlass an vorzugsweise der saugseitigen Fläche des Rotorblattes verbunden. Ferner ist der Ventilator oder Verdichter mit seiner Druckseite mit dem Luftauslass auf der druckseitigen Fläche des Rotorblattes fluidleitend verbunden. Vorzugsweise wird ein Ventilator oder Verdichter verwendet, der dazu eingerichtet ist, eine Luftströmung in beide Richtungen innerhalb der an den Ventilator oder Verdichter angeschlossenen Luftleitkanäle zu erzeugen.

Vorzugsweise kommt ein Axial-Ventilator oder Axialverdichter zum Einsatz. In einer anderen Ausführungsform der Erfindung wird ein Radial-Ventilator oder Radialverdichter verwendet. Im Gegensatz zu Axial-Ventilatoren oder -verdichtern können mit RadialVentilatoren oder Radialverdichtern größere Druckverluste in Luftleitkanälen mit längeren Kanallängen für eine zumindest über einen Abschnitt in Rotorblatt-Längsrichtung geführte Luftströmung ausgeglichen werden. Alternativ zu dem Ventilator oder dem Verdichter können in anderen Ausführungsformen auch andere bekannte Mittel zur Luftführung vorgesehen sein.

In einer Ausführung der Erfindung erfolgt das Absaugen der Grenzschicht auf der saugseitigen und druckseitigen Fläche des Rotorblattes über die schlitzartigen Lufteinlässe auf somit voneinander abgewandten Seiten des Rotorblattes. Der Luftauslass ist in einem entfernten Bereich zu den Lufteinlässen, wie beispielsweise der Hinterkante des Hinterkantensegments oder der Blattspitze.

Vorzugsweise setzt sich in einer Ausführungsform des Rotorblattes jedes Hinterkantensegment wenigstens aus einem ersten und einem zweiten Segmentabschnitt zusammen. Durch die unterteilte Ausgestaltung des Hinterkantensegmentes in mehrere, vorzugsweise mindestens zwei, drei oder vier Segmentabschnitte, ist die Montage des Hinterkantensegmentes an dem Innenblattabschnitt des zu erzeugenden Rotorblattes vereinfacht. Wenigstens ein Segmentabschnitt des Hinterkantensegmentes kann zum Beispiel bei der Fertigung des Innenblattabschnittes am Innenblattabschnitt angeordnet werden. In einer Ausführung der Erfindung sind die mehreren Segmentabschnitte in Längsrichtung des Rotorblattes nebeneinander angeordnet, das Hinterkantensegment, auch als Hinterkasten bezeichnet, wird somit aus in Erstreckungsrichtung des Rotorblattes benachbart nebeneinander angeordneten Segmentabschnitten ausgebildet.

In einer alternativen Ausführungsform ist vorgesehen, das Hinterkantensegment in ein mit dem Innenblattabschnitt verbindbaren Segmentabschnitt und mindestens ein die Hinterkante des Hinterkantensegmentes aufweisenden weiteren Segmentabschnitt zu unterteilen. Der mit dem Innenblattabschnitt verbindbare bzw. zu verbindende Segmentabschnitt bildet ein Fußsegment aus. Der oder die die Hinterkante aufweisende/aufweisenden Segmentabschnitt/-abschnitte bildet/bilden dann bevorzugt das Kopfsegment des Hinterkantensegmentes aus. Vorzugsweise ermöglicht ein als Fußsegment ausgebildeter Segmentabschnitt das Anbringen ab Werk, ohne die Abmessungen des Innenblattabschnittes in Richtung der Profiltiefe zu erhöhen.

Die Erfindung wird dadurch vorteilhaft weitergebildet, dass der als Fußsegment ausgebildete Segmentabschnitt für jeden das Kopfsegment ausbildenden Segmentabschnitt eine separate Unterteilungsebene aufweist, in welcher das oder die Kopfsegmente mit dem Fußsegment koppelbar sind. Durch das Bereitstellen separater Unterteilungsebenen für jedes Kopfsegment wird die Zuordnung zu einem die jeweiligen Unterteilungsebene aufweisenden Bereich des Fußsegments vereinfacht.

Gemäß einer alternativen vorteilhaften Ausführungsform weist das Fußsegment für mehrere oder sämtliche Kopfsegmente eine durchgehende Unterteilungsebene auf, in welcher die jeweiligen Kopfsegmente mit dem Fußsegment koppelbar sind. Eine durchgehende, sich über mehrere oder sämtliche Zuordnungsbereiche zwischen Fußsegment und Kopfsegmenten erstreckende Unterteilungsebene bietet den Vorteil, dass mehrere Segmentabschnitte hintereinander auf der gemeinsamen Unterteilungsebene mit dem Fußsegment gekoppelt werden können, und sich dabei gegenseitig abstützen. Hierdurch wird der Aufwand, die Position der mehreren Kopfsegmente zu fixieren, deutlich verringert.

Gemäß einer weiteren bevorzugten Ausführungsform der Erfindung ist die eine bzw. sind die mehreren Unterteilungsebenen derart angeordnet, dass die maximale Profiltiefe des Rotorblatts von 4 m oder weniger liegt, wenn das Fußsegment mit dem Rotorblatt verbunden ist. Dadurch, dass eine Längsteilung gewählt wird, die zu einer maximalen Profiltiefe in dem vorstehend erwähnten Bereich führt, ist die Transportfähigkeit des Rotorblatts samt vorab angebrachtem Fußsegment des Hinterkantensegmentes deutlich verbessert.

Die Unterteilungsebenen sind vorzugsweise im Wesentlichen in Längsrichtung der Rotorblattachse ausgerichtet. Vorzugsweise ist zwischen der Rotorblattachse und der bzw. den Unterteilungsebenen ein Winkel in einem Bereich von 30° oder weniger aufgespannt.

Gemäß einer weiteren bevorzugten Ausführungsform sind das Fußsegment und das oder die Kopfsegmente formschlüssig miteinander koppelbar.

Gemäß einer bevorzugten Weiterbildung der Erfindung ist das Hinterkantensegment über wenigstens ein erstes und ein zweites Befestigungselement mit dem Innenblattabschnitt verbunden, wobei vorzugsweise die Befestigungselemente in Abständen zueinander in Rotorblatt-Längsrichtung angeordnet sind. Vorzugsweise ist das erste Befestigungselement in unmittelbarer Nähe zur Blattwurzel angeordnet. Das mindestens eine weitere, also das zweite Befestigungselement, ist etwa am entgegengesetzten Ende des Hinterkantensegmentes angeordnet. In Abhängigkeit davon, ob das Hinterkantensegment aus einer Vielzahl von Segmentabschnitten ausgebildet ist, ist pro Segmentabschnitt wenigstens ein oder sind pro Segmentabschnitt bevorzugt zwei Befestigungselemente zum Befestigen am Innenblattabschnitt vorgesehen. Die Verbindung des Hinterkantensegmentes erfolgt nicht mehr über die Oberseite bzw. Unterseite des Hinterkantensegmentes, sondern über die Befestigungselemente, sodass im Übergangsbereich vom Innenblattabschnitt zum Hinterkantensegment die erfindungsgemäßen Lufteinlässe und/oder Luftauslässe in Form von Schlitzen oder Spalten auf den saugseitigen und druckseitigen Flächen des Rotorblattes ausgebildet werden können. Bevorzugt bildet das Hinterkantensegment einen von der Außenseite des Hinterkantensegmentes abgeschirmten Aufnahmeraum für das mindestens erste und das zweite Befestigungselement aus. Damit sind die Befestigungselemente vor Umwelteinflüssen geschützt und beeinflussen zudem nicht die Aerodynamik des Rotorblattes nachteilig.

Vorzugsweise weist in einer bevorzugten Ausgestaltung der Erfindung das wenigstens eine Befestigungselement zumindest einen das Hinterkantensegment versteifenden Rippenkörper auf, wobei der Rippenkörper vorzugsweise über zumindest einen, zwei oder mehr Befestigungspunkte mit der Außenfläche des Innenblattabschnittes und mit der Innenseite des Hinterkantensegmentes verbunden ist. Mit Hilfe des Rippenkörpers wird das Hinterkantensegment derart versteift, dass die insbesondere der Saugseite am Rotorblatt zugeordnete Oberseite und die der Druckseite am Rotorblatt zugeordnete Unterseite des Hinterkantensegmentes bevorzugt formstabil zueinander angeordnet sind. Der im Aufnahmeraum des Hinterkantensegmentes angeordnete Rippenkörper des Befestigungselementes wird jeweils vorzugsweise über mindestens zwei Befestigungspunkte mit der Außenfläche des Innenblattabschnittes und an den jeweils zugeordneten Innenflächen von Oberseite und Unterseite des Hinterkantensegmentes befestigt. Vorzugsweise wird der Rippenkörper mittels einer Kraftschlussverbindung oder einer Stoffschlussverbindung mit den entsprechend zugeordneten Flächenbereichen von Innenblattabschnitt und Hinterkantensegment verbunden.

In einer Ausführungsform der Erfindung sind an dem Rippenkörper den Verbindungsflächen von Innenblattabschnitt und Hinterkantensegment zugeordnete Verbindungsrippen oder Verbindungsstege angeordnet, mit denen vorzugsweise der Verbindungsbereich zwischen dem Befestigungselement und dem damit zu koppelnden Bauteil vergrößert ist. Dadurch ist die strukturelle Verbindung zwischen dem Hinterkantensegment und dem Innenblattabschnitt des Rotorblattes weiter verbessert.

In einer bevorzugten Ausführungsform weist der erste und der zweite Rippenkörper jeweils eine Verbindungsfläche oder -kante auf, die sich z. B. über die gesamte Profiltiefe des Hinterkantensegmentes erstreckt und/oder innerhalb des Aufnahmeraums an der Oberseite und/oder der Unterseite des Hinterkantensegmentes befestigt ist. Durch die Länge der jeweiligen Versteifungsrippe entlang der Profiltiefe wird zum Einen eine Versteifung des Hinterkantensegmentes und zum Anderen eine gleichmäßige Lastübertragung sichergestellt. Die Befestigung dieser Kante im Innern des Hinterkantensegmentes schützt die Anbindung vor äußeren Einflüssen.

In einer besonders bevorzugten Ausführungsform weist der erste und der zweite Rippenkörper ein oder mehrere Querkanten auf, die an die Geometrie des Innenblattabschnitts angepasst ist. Die Querkante verläuft dabei von der Oberseite zur Unterseite des Hinterkantensegmentabschnitts. Durch die Anpassung der Querkante an die Geometrie des Innenblattabschnitts wird eine passgenaue Anbindung des Befestigungselementes mit dem Innenblattabschnitt gewährleistet. Die Querkante kann somit die Verbindung des Innenblattabschnitts und des Hinterkantensegmentabschnitts weiter festigen. Eine feste Verbindung von der Querkante bzw. einem Verklebefuß zu dem Innenblattabschnitt ist dadurch ebenfalls möglich.

Vorzugsweise sind der erste Rippenkörper sowie der zweite Rippenkörper mit ihren Verbindungsflächen über eine stoffschlüssige und/oder formschlüssige Verbindung befestigt. Dabei werden die Rippenkörper und die Verbindungsflächen jeweils an einer gemeinsamen Kontaktfläche miteinander verbunden. Die jeweilige Verbindungstechnik wird dabei in Abhängigkeit von den auftretenden Lasten und dem geometrischen Aufbau des Hinterkantensegmentes und Innenblattabschnitts angepasst. Eine besonders feste Verbindung wird durch eine Kombination einer formschlüssigen und stoffschlüssigen Verbindung erzielt.

In einer bevorzugten Ausführungsform umfasst die stoffschlüssige Verbindung eine Klebeverbindung, insbesondere eine Klebeverbindung umfassend einen Zweikomponenten-Klebstoff. Eine solche Klebeverbindung weist dabei den Vorteil auf, dass eine Krafteinleitung auch bei verschiedenen Materialien eingeleitet werden kann, wie beispielsweise eine Krafteinleitung von einem glasfaserverstärkten Kunststoff auf ein Aluminiumbauteil. Die Querschnitte der Verbindungsflächen und der Rippenkörper werden nicht reduziert und die Spannungsverteilung erfolgt gleichmäßig. Zudem können durch eine Klebeverbindung Passungenauigkeiten ausgeglichen werden, die bei der Fertigung entstehen können.

In einer besonders bevorzugten Ausführungsform umfasst die kraftschlüssige Verbindung eine Nietverbindung, Schraubverbindung, Bolzenverbindung und/oder Schlaufenverbindung. Bei einer hohen Belastung an den Verbindungsstellen sind solche Verbindungstechniken dabei vorteilhaft. Eine Niet-, Schraub-, und Bolzenverbindung hat dabei den Vorteil, dass sie hohe Lasten übertragen werden können und die benötigten Verbindungselemente mit hoher Qualität gefertigt werden können. Dadurch wird eine hohe Sicherheit im Bereich der Verbindung erzielt. Zudem ist eine solche Verbindungtechnik kostengünstig. Bei einer hohen punktuellen Lasteinleitung ist dabei insbesondere eine Schlaufenverbindung durch Aufteilung der Last in zwei Stränge vorteilhaft.

Vorzugsweise sind der erste Rippenkörper und die erste Verbindungsfläche sowie der zweite Rippenkörper und die zweite Verbindungsfläche planparallel zueinander angeordnet. Durch die planparallele Anordnung wird eine ausreichend große Fläche bereitgestellt, über die die jeweiligen Rippenkörper und Verbindungsflächen eine Verbindung herstellen.

Die Erfindung betrifft des Weiteren eine Windenergieanlage mit einem Turm, einer Gondel und einem Rotor. Die Erfindung löst auch die bei dem erfindungsgemäßen Rotorblatt zugrundegelegte Aufgabe, indem ein mit dem Rotor verbundenes Rotorblatt nach einer der vorstehend beschriebenen bevorzugten Ausführungsformen der Erfindung ausgebildet ist. Mit einem solch erfindungsgemäß ausgebildeten Rotorblatt ist eine Grenzschichtbeeinflussung am Rotorblatt möglich, wodurch die Effizienz der Windenergieanlage auf einfache Weise verbessert werden kann.

Des Weiteren betrifft die Erfindung auch einen Windpark mit mehreren Windenergieanlagen, welche gemäß einer der vorstehend beschriebenen bevorzugten Ausführungsformen der Erfindung ausgebildet sind.

Die zum erfindungsgemäßen Rotorblatt beschriebenen, bevorzugten Ausführungsformen bzw. Weiterbildungen sind zugleich auch bevorzugte Ausführungsformen der erfindungsgemäßen Windenergieanlage sowie des erfindungsgemäßen Windparks.

Die Erfindung wird im Folgenden anhand eines möglichen Ausführungsbeispiels unter Bezugnahme auf die beigefügten Figuren näher beschrieben. Hierbei zeigen:
- Fig. 1:: eine Windenergieanlage gemäß der vorliegenden Erfindung;
- Fig. 2:: eine perspektivische Ansicht eines Abschnittes eines erfindungsge-mäßen Rotorblattes gemäß einem ersten Ausführungsbeispiel;
- Fig. 3:: eine perspektivische Ansicht eines Abschnittes eines Rotorblattes gemäß der Erfindung in einem zweiten Ausführungsbeispiel;
- Fig. 4:: eine Ansicht des Rotorblattes gemäß Fig. 3 im Schnitt bei natürlicher Luftströmung;
- Fig. 5:: eine Ansicht des Rotorblattes nach Fig. 3 bei einer mittels eines Ventilators oder Verdichters erzeugten erzwungenen Luftströmung; und
- Fig. 6a bis 6c:: Ansichten möglicher Muster von Lufteinlässen oder Luftauslässen auf einer saugseitigen oder druckseitigen Fläche eines Rotorblattes.

Wenngleich bestimmte Merkmale bevorzugter Ausführungsformen nur bezüglich einzelner Ausführungsbeispiele beschrieben sind, erstreckt sich die Erfindung auch auf die Kombination einzelner Merkmale der unterschiedlichen Ausführungsbeispiele untereinander.

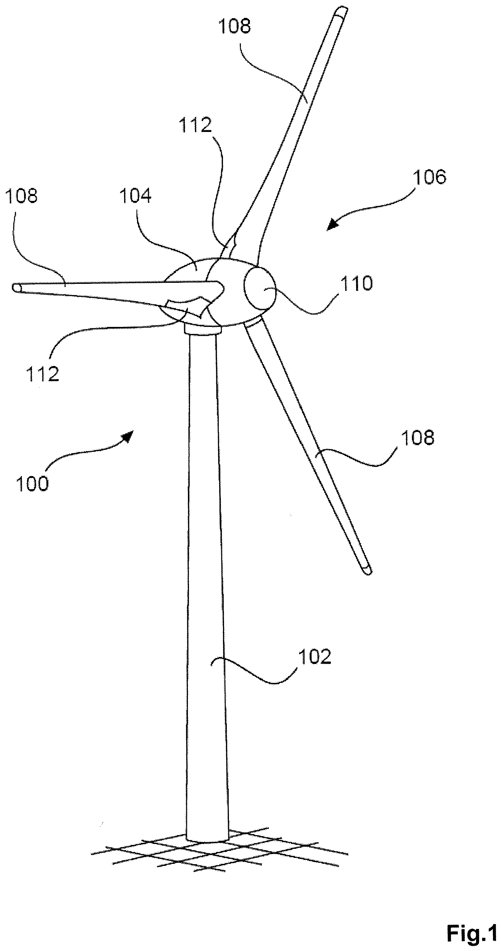

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen (nicht dargestellten) Generator in der Gondel 104 an.

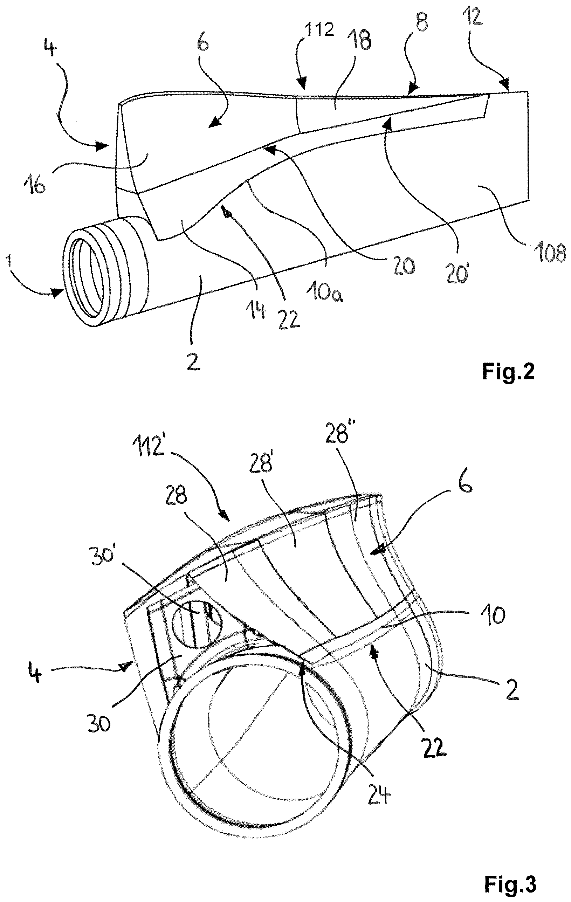

Die Rotorblätter 108 weisen jeweils ein Hinterkantensegment 112, 112' auf, mittels dessen sie als anschmiegsame Rotorblätter ausgebildet sind. Das Hinterkantensegment 112, 112' ist in mehrere Segmentabschnitte unterteilt, wie sich aus den nachfolgenden Figuren 2 und 3 im Detail erkennen lässt.

In Fig. 2 ist das Rotorblatt 108 mit einem Hinterkantensegment 112 gemäß einem ersten Ausführungsbeispiel dargestellt. Das in Fig. 2 dargestellte Rotorblatt 108 weist in einem sich an die Rotorblattwurzel 1 anschließenden Innenblattabschnitt 2 das die Profiltiefe des Rotorblattes verlängernde Hinterkantensegment 112 auf. Das Hinterkantensegment 112 weist eine saugseitige Fläche 4 und eine druckseitige Fläche 6 auf, die durch eine Hinterkante 8 am Hinterkantensegment 112 voneinander getrennt sind.

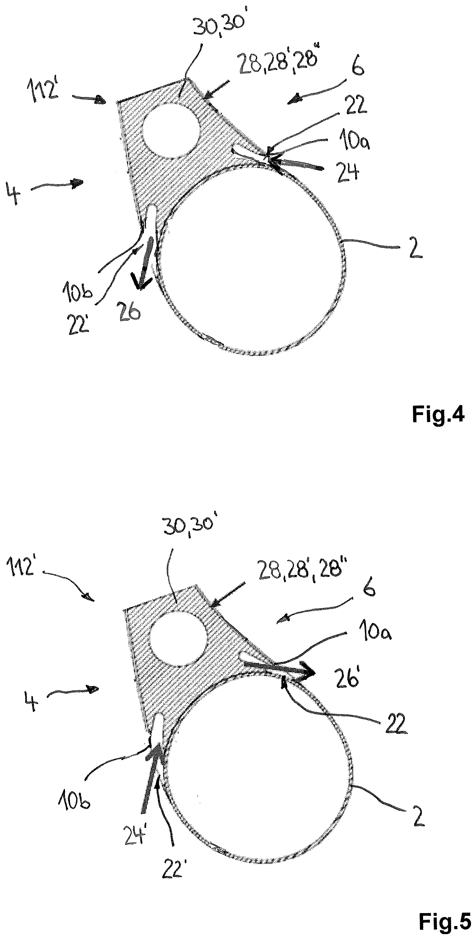

Gegenüber der Hinterkante 8 ist die Verbindungsseite des Hinterkantensegmentes 112 mit dem Innenblattabschnitt 2 des Rotorblattes 108 angeordnet. Auf der Verbindungsseite verläuft eine erste Kante 10a und eine zweite Kante 10b (siehe Fig. 4), welche die saugseitige und druckseitige Fläche 4, 6 des Hinterkantensegmentes 112 begrenzt. Die Kanten 10a, 10b sind an die Krümmung des Rotorblattes 108 angepasst und verlaufen im Wesentlichen in Rotorblatt-Längsrichtung. Die Hinterkante 8 des Hinterkantensegmentes 112 ist im montierten Zustand auf die Hinterkante 12 des sich an den Innenblattabschnitt 2 anschließenden Bereiches des Rotorblattes 108 ausgerichtet und geht fließend in diese über.

In der vorliegenden Ausführungsform weist das Hinterkantensegment 112 einen als Fußsegment ausgebildeten Segmentabschnitt 14 auf, welcher die Verbindungsseite zum Innenblattabschnitt 2 aufweist. Das Hinterkantensegment 112 weist das die Verbindungsseite aufweisende Fußsegment 14 und zwei mit dem Fußsegment 14 gekoppelte, Kopfsegmente ausbildende Segmentabschnitte 16, 18 auf. Beide Kopfsegmente 16, 18 bilden jeweils einen Teil der Hinterkante 8 des Hinterkantensegmentes 112. Die Kopfsegmente 16, 18 sind in etwa parallel zur Rotorblatt-Längsachse verlaufende Unterteilungsebenen 20, 20' vom Fußsegment 14 getrennt.

In der gezeigten Ausführungsform endet die Kante 10a am Fußsegment 14 des Hinterkantensegmentes 112 im Abstand zur äußeren Fläche bzw. Außenkontur des Innenblattabschnittes 2, wodurch ein Spalt 22 zwischen der druckseitigen Fläche 6 des Hinterkantensegmentes 112 und des Innenblattabschnittes 2 ausgebildet ist. Über den Spalt 22, der im Übergangsbereich vom Innenblattabschnitt 2 zum Hinterkantensegment 112 ausgebildet ist, ist ein Absaugen oder Ausblasen der Grenzschicht auf der druckseitigen Fläche 6 des Rotorblattes 108 möglich. Bevorzugt ist über den Spalt 22 ein Lufteinlass 24 in das Innere oder ein Luftauslass 26 aus dem Inneren des Hinterkantensegmentes 112 ausgebildet.

In einer nicht genauer gezeigten Ausführungsform der Erfindung ist alternativ oder optional auf der saugseitigen Fläche 4 des Rotorblattes 108 die Kante 10b ebenfalls im Abstand zur äußeren Struktur des Innenblattabschnittes 2 angeordnet und somit ein Spalt 22' vorhanden. Mit dem Spalt 22' ist alternativ ein Lufteinlass 24' oder optional ein Lufteinlass 24' oder Luftauslass 26 ausgebildet. Über den Lufteinlass 24' oder den Luftauslass 26' ist ebenfalls eine Beeinflussung der vorbeiströmenden Luftströmung auf der saugseitigen Fläche 4 des Rotorblattes 108 erreicht.

Fig. 3 zeigt eine zweite Ausführungsform eines Rotorblattes 108, bei der im Wurzelbereich des Rotorblattes ein Hinterkantensegment 112' am Innenblattabschnitt 2 des Rotorblattes 108 angeordnet ist. Im Gegensatz zum Hinterkantensegment 112 ist das Hinterkantensegment 112' aus mehreren Segmentabschnitten 28, 28', 28" ausgebildet, die in Rotorblatt-Längsrichtung benachbart zueinander und nebeneinander am Innenblattabschnitt 2 angeordnet sind. Auch das sich aus den Segmentabschnitten 28, 28' zusammensetzende Hinterkantensegment 112' weist eine Kante 10a, 10b auf, die im Abstand zur äußeren Struktur des Innenblattabschnittes 2 angeordnet ist.

In einer bevorzugten Ausführungsform sind somit auf der saugseitigen Fläche 4 und der druckseitigen Fläche 6 des in Fig. 3 gezeigten Rotorblattes 108 schlitzförmige Lufteinlässe und/oder Luftauslässe 24, 24', 26, 26' in Form eines Spaltes 22, 22' ausgebildet. Ein jeweiliger am Rotorblatt 108 ausgebildeter Spalt 22, 22' kann in einer Ausführungsform durchgehend am Hinterkantensegment 112, 112' sein. Vorliegend ist der Spalt 22 im Übergangsbereich zwischen dem Innenblattabschnitt 2 und dem Hinterkantensegment 112' ausgebildet. In einer anderen Ausführungsform weist der Spalt 22, 22' mehrere Einzelspalte auf, welche im Wesentlichen in einer Reihe hintereinander angeordnet sind und etwa parallel zur Rotorblatt-Längsachse verlaufen. Auch die Lufteinlässe 24, 24' oder der Luftauslass 26, 26' sind auf der saugseitigen Fläche 4 und der druckseitigen Fläche 6 des Rotorblattes 108 im Übergangsbereich zwischen dem Innenblattabschnitt und dem Hinterkantensegment 112' ausgebildet.

Fig. 4 zeigt die Ausführungsform des Rotorblattes 108 aus Fig. 3 im Schnitt. Das Hinterkantensegment 112' ist mittels mehrerer Befestigungselemente 30, 30' am Innenblattabschnitt 2 angeordnet. Der Innenblattabschnitt 2 weist in der gezeigten Ausführungsform einen etwa ringförmigen oder ellipsenförmigen Querschnitt auf, wobei die Querschnittsform des Innenblattabschnittes 2 sich in Abhängigkeit des Abstandes des Innenblattabschnittes von der Blattwurzel verändert. Bei der in Fig. 3 gezeigten Ausführungsform des Hinterkantensegmentes 112' ist jeder Segmentabschnitt 28, 28', 28" über wenigstens zwei Befestigungselemente 30, 30' am Innenblattabschnitt des Rotorblattes 108 befestigt.

Fig. 4 verdeutlicht insbesondere die Ausführungsform der Erfindung, in der eine Grenzschichtbeeinflussung der entlang zu beiden Seiten des Rotorblattes 108 strömenden Luftströmung ohne eine gezielte Beeinflussung durch zusätzliche Maßnahmen erfolgt. Aufgrund des auf der druckseitigen Fläche 6 statisch höheren Druckes im Vergleich zur saugseitigen Fläche 4 des Rotorblattes 108 und dem sich ergebenden Druckunterschied zwischen der Druckseite und der Saugseite des Rotorblattes 108 entsteht über die Spalte 22. 22' eine natürlich erzeugte Luftströmung (Ausgleichsströmung) durch das Hinterkantensegment 112' von der Druckseite des Rotorblattes auf die Saugseite des Rotorblattes. In der gezeigten Ausführung bildet der Spalt 22 den Lufteinlass 24 auf der Druckseite und der Spalt 22' den Luftauslass 26 auf der Saugseite. Damit wird die Luftströmung auf der druckseitigen Fläche des Rotorblattes 108 abgesaugt und auf der saugseitigen Fläche 4 des Rotorblattes 108 ausgeblasen. Mit dem Ausblasen der Luftströmung auf der saugseitigen Fläche 4 des Rotorblattes soll die dort vorbei strömende Luftströmung stabilisiert und Turbulenzen insbesondere im hinteren Bereich des Rotorblattes 108, also am Hinterkantensegment, vermieden werden sollen. In der in Fig. 4 gezeigten Ausführung wird der Luftstrom auf der Saugseite entgegen der eigentlichen Strömungsrichtung der entlang des Blattprofils vorbeiströmenden Luft ausgeblasen.

In einer nicht gezeigten Ausführungsform ist der Luftauslass 26 so angeordnet, dass die über den Luftauslass aus dem Hinterkantensegment 112' ausgeblasene Luft etwa in Richtung der entlang des Blattprofils strömenden Luft herausströmt.

In Fig. 5 ist das Rotorblatt 108 mit seinem Innenblattabschnitt 2 und seinem daran angeordneten Hinterkantensegment 112' wiederum im Schnitt dargestellt. Entgegen der in Fig. 4 gezeigten Ausführungsform umfasst das Rotorblatt 108 in Fig. 5 einen nicht näher dargestellten Ventilator oder Verdichter, der innerhalb des Hinterkantensegmentes 112' angeordnet ist. Mit dem Ventilator oder Verdichter wird innerhalb des Hinterkantensegmentes 112' eine erzwungene Luftströmung erzeugt, wobei entgegen der vorher beschriebenen Ausführungsform nunmehr der Lufteinlass 24'auf der saugseitigen Fläche 4 des Rotorblattes 108 und der Luftauslass 26' auf der druckseitigen Fläche 6 des Rotorblattes 108 liegt. Mittels des Absaugens der Luftströmung auf der Saugseite des Rotorblattes 108 über den Lufteinlass 24' wird einer Aufdickung der Grenzschicht im Bereich des Hinterkantensegmentes 112' des Rotorblattes entgegengewirkt. Die auf der Saugseite abgesaugte Luftströmung wird über den Ventilator oder Verdichter im Hinterkantensegment 112' über den Luftauslass 26' auf der druckseitigen Fläche 6 des Rotorblattes ausgeblasen. Das Absaugen erfolgt in der in Fig. 5 gezeigten Ausführungsform in Richtung der am Rotorblatt vorbeiströmenden Luft, und das Ausblasen erfolgt entgegen der Strömungsrichtung der am Rotorblatt vorbeiströmenden Luft. In einer nicht näher dargestellten Ausführungsform sind im Hinterkantensegment mit dem Lufteinlass 24' verbundene Lufteintrittskanäle angeordnet. In einer weiteren Ausführungsform sind im Hinterkantensegment mit dem Luftauslass 26' verbundene Luftaustrittskanäle vorgesehen. In einer anderen Ausführungsform der Erfindung, welche nicht näher dargestellt ist, sind innerhalb des Hinterkantensegmentes 112' Luftleitkanäle angeordnet, welche die Verbindung zwischen Lufteinlass und Luftauslass herstellen und zumindest abschnittsweise parallel zur Rotorblatt-Längsrichtung verlaufen.

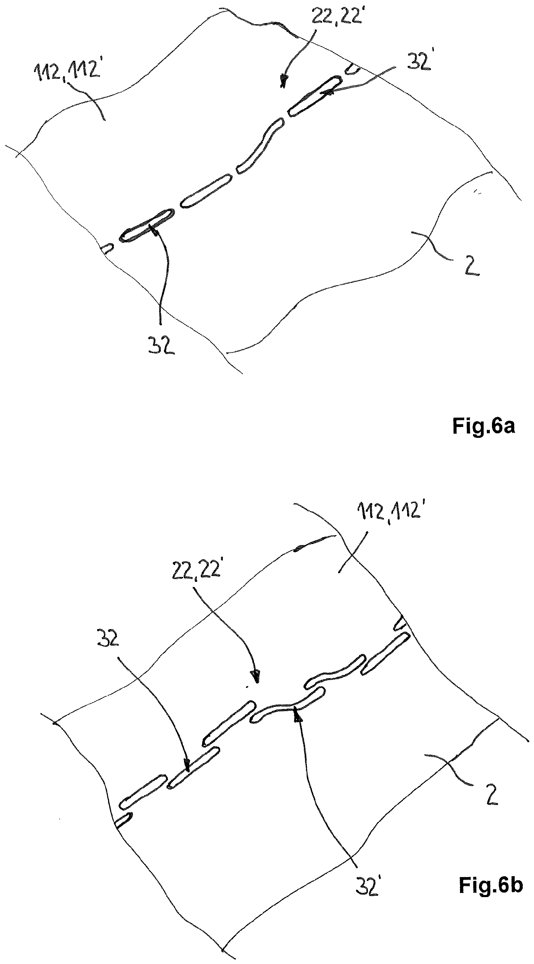

Die Figuren 6a bis 6c zeigen mögliche Ausführungsformen der vorzugsweise in einem Übergangsbereich vom Innenblattabschnitt 2 zum Hinterkantensegment 112, 112' in der saugseitigen Fläche 4 und/oder der druckseitigen Fläche 6 des Rotorblattes 108 ausgebildeten Lufteinlässe 24, 24' und/oder Luftauslass 26, 26'. Der Lufteinlass bzw. der Luftauslass, 24, 24', 26, 26' weist die Form eines Schlitzes oder Spaltes 22, 22' auf. Der Spalt 22, 22' kann aus mehreren Einzelspalten 32, 32' ausgebildet sein, welche in der in Fig. 6a gezeigten Ausführung in einer Reihe hintereinander angeordnet sind, wobei die Einzelspalte 32, 32' im Wesentlichen parallel zur Rotorblatt-Längsrichtung verlaufen.

In der in Fig. 6b gezeigten Ausführungsform ist der Spalt 22, 22' aus mehreren Einzelspalten 32, 32' ausgebildet, welche ebenfalls im Wesentlichen in Rotorblatt-Längsrichtung verlaufen. Im Gegensatz zu der in Fig. 6a gezeigten Ausführungsform sind unmittelbar einander benachbarte Einzelspalte quer zur Rotorblatt-Längsrichtung, also in Profiltiefe, versetzt zueinander angeordnet und weisen in ihren Endbereichen eine Überdeckung auf. Die Überdeckung entspricht etwa einem Maß von ungefähr einem Fünftel der Länge eines Einzelspaltes 32, 32'. Andere Überdeckungsverhältnisse sind möglich. Mit der in Fig. 6b gezeigten Ausführungsform ist ein vergrößerter Querschnitt des Luftein- und/oder Luftauslasses 24, 24', 26, 26' auf der saugseitigen oder druckseitigen Fläche 4, 6 des Rotorblattes bei gleicher Gesamtlänge des Spaltes 22, 22' im Übergangsbereich zwischen dem Innenblattabschnitt 2 und dem Hinterkantensegment 112, 112' erreicht.

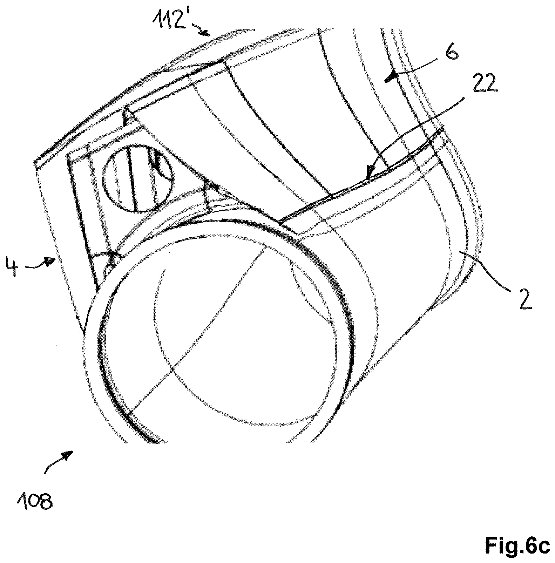

Fig. 6c zeigt eine schematische Darstellung eines Abschnittes des Rotorblattes 108. Das Rotorbaltt 108 weist an der saugseitigen und druckseitigen Fläche 4, 6 einen durchgehenden Spalt 22 auf, der sich in der vorliegend dargestellten Ausführungsform über die gesamte Länge des Hinterkantensegmentes 112' erstreckt. Wie Fig. 6c verdeutlicht ist der Spalt 22 für den Lufteinlass oder Luftauslass unmittelbar in der Oberfläche des Hinterkantensegmentes 112' ausgebildet. Anstatt des durchgängigen Spaltes 22 können auch die in den Figuren 6a und 6b gezeigten Spalte 22' mit ihren mehreren Einzelspalten 32, 32' am Rotorblatt vorgesehen sein.

### Bezugszeichenliste:

- 1: Blattwurzel
- 2: Innenblattabschnitt
- 4: saugseitige Fläche
- 6: druckseitige Fläche
- 8: Hinterkante
- 10a, b: Kante
- 12: Hinterkante
- 14: Fußsegment
- 16, 18: Kopfsegment
- 20, 20': Unterteilungsebene
- 22, 22': Spalt
- 24, 24': Lufteinlass
- 26, 26': Luftauslass
- 28, 28', 28": Segmentabschnitt
- 30, 30': Befestigungselement
- 32, 32': Einzelspalt
- 100: Windenergieanlage
- 102: Turm
- 104: Gondel
- 106: Rotor
- 108: Rotorblatt
- 110: Spinner
- 112, 112': Hinterkantensegment

## Patentansprüche

1. Rotorblatt (108) für eine Windenergieanlage, mit
einem Innenblattabschnitt (2), der sich ausgehend von einer Rotorblattwurzel (1) in Längsrichtung des Rotorblattes (108) erstreckt,
einem an dem Innenblattabschnitt (2) angeordneten Hinterkantensegment (112, 112') zur Vergrößerung der Profiltiefe des Rotorblattes entlang eines Abschnittes in Rotorblatt-Längsrichtung,
wobei das Rotorblatt (108) eine druckseitige Fläche (4) und eine saugseitige Fläche (6) aufweist, die jeweils bereichsweise aus Teilen des Innenblattabschnittes (2) und des Hinterkantensegmentes (112, 112') ausgebildet sind,
**dadurch gekennzeichnet,**
**dass** auf der druckseitigen und/oder saugseitigen Fläche (4, 6) des Rotorblattes (108) unmittelbar im Übergangsbereich vom Innenblattabschnitt (2) zum Hinterkantensegment (112, 112') wenigstens ein sich in Wesentlichen in Rotorblatt-Längsrichtung erstreckender schlitzartiger Lufteinlass und/oder Luftauslass (24, 24', 26, 26') ausgebildet ist.

2. Rotorblatt nach Anspruch 1,
**dadurch gekennzeichnet, dass** auf der druckseitigen und saugseitigen Fläche (4, 6) des Rotorblattes (108) jeweils wenigstens ein schlitzartiger Lufteinlass und/oder Luftauslass (24, 24', 26, 26') angeordnet ist.

3. Rotorblatt nach Anspruch 2,
**dadurch gekennzeichnet, dass** der Lufteinlass (24) auf der druckseitigen Fläche (6) des Rotorblattes (108) und der Luftauslass (26) auf der saugseitigen Fläche (4) des Rotorblattes angeordnet sind.

4. Rotorblatt nach mindestens einem der Ansprüche 1 bis 3,
**dadurch gekennzeichnet, dass** der Lufteinlass und/oder Luftauslass (24, 24', 26, 26') sich im Wesentlichen über die gesamte Länge des Hinterkantensegmentes (112, 112') erstreckt.

5. Rotorblatt nach mindestens einem der Ansprüche 1 bis 4,
**dadurch gekennzeichnet, dass** das Hinterkantensegment (112, 112') derart am Innenblattabschnitt angeordnet ist, dass am Lufteinlass und/oder Luftauslass (24, 24', 26, 26') ein Lufteintritts- bzw. Luftaustrittskanal für eine gerichtete Luftströmung ausgebildet ist.

6. Rotorblatt nach Anspruch 5,
**dadurch gekennzeichnet, dass** der Lufteintritts- bzw. Luftaustrittskanal dazu eingerichtet sind, die Luftströmung im Bereich des Lufteinlasses und/oder Luftauslasses (24, 24', 26, 26') im Wesentlichen parallel zur jeweils angrenzenden äußeren Oberfläche des Innenblattabschnittes (2) umzulenken.

7. Rotorblatt nach mindestens einem der Ansprüche 1 bis 6,
**dadurch gekennzeichnet, dass** das Rotorblatt (108) einen Ventilator oder Verdichter aufweist, wobei der Lufteinlass und der Luftauslass (24, 24', 26, 26') fluidleitend mit dem Ventilator oder Verdichter für eine zwangsbewegte Luftführung durch zumindest das Hinterkantensegment (112, 112') kommunizieren.

8. Rotorblatt nach Anspruch 7,
**dadurch gekennzeichnet, dass** der Ventilator oder Verdichter im Innenblattabschnitt (2) des Rotorblattes (108) angeordnet ist, wobei vorzugsweise der Innenblattabschnitt (2) in seinem Strukturkörper Luftdurchtrittsöffnungen und/oder Luftleitkanäle für die fluidleitende Verbindung zwischen dem Ventilator oder dem Verdichter und dem Lufteinlass und/oder Luftauslass (24, 24', 26, 26') aufweist.

9. Rotorblatt nach Anspruch 7,
**dadurch gekennzeichnet, dass** der Ventilator oder Verdichter im Hinterkantensegment (112, 112') des Rotorblattes (108) angeordnet ist.

10. Rotorblatt nach mindestens einem der Ansprüche 1 bis 9,
**dadurch gekennzeichnet, dass** jedes Hinterkantensegment (112, 112') sich wenigstens aus einem ersten und einem zweiten Segmentabschnitt (14, 16, 18, 28, 28', 28") zusammensetzt.

11. Rotorblatt nach mindestens einem der Ansprüche 1 bis 10,
**dadurch gekennzeichnet, dass** das Hinterkantensegment (112, 112') über wenigstens ein erstes und ein zweites Befestigungselement (30, 30') mit dem Innenblattabschnitt (2) verbunden ist, wobei vorzugsweise die Befestigungselemente (30, 30') in Abständen zueinander in Rotorblatt-Längsrichtung angeordnet sind.

12. Rotorblatt nach Anspruch 11,
**dadurch gekennzeichnet, dass** wenigstens ein Befestigungselement (30, 30') zumindest einen das Hinterkantensegment (112, 112') versteifenden Rippenkörper aufweist, wobei der Rippenkörper vorzugsweise über zumindest einen, zwei oder mehr Befestigungspunkte mit der Außenfläche des Innenblattabschnittes (2) und mit der Innenseite des Hinterkantensegmentes (112, 112') verbunden ist.

13. Windenergieanlage (100), mit einem Turm (102), einer Gondel (104) und einem Rotor (106),
**gekennzeichnet durch** mindestens ein mit dem Rotor (106) verbundenes Rotorblatt (108) nach einem der Ansprüche 1 bis 12.

14. Windpark mit mehreren Windenergieanlagen nach Anspruch 13.

## Claims

1. A rotor blade (108) for a wind turbine, having
an inner blade portion (2), which extends in the longitudinal direction of the rotor blade (108) starting from a rotor blade root (1),
a trailing edge segment (112, 112') arranged on the inner blade portion (2) and intended for increasing the profile depth of the rotor blade along a portion in the rotor blade longitudinal direction,
wherein the rotor blade (108) has a pressure-side surface (4) and a suction-side surface (6) which are each formed in certain areas from parts of the inner blade portion (2) and of the trailing edge segment (112, 112'),
**characterized,**
**in that** at least one slot-like air inlet and/or air outlet (24, 24', 26, 26') which extends substantially in the rotor blade longitudinal direction is formed on the pressure-side and/or suction-side surface (4, 6) of the rotor blade (108) directly in the transition area from the inner blade portion (2) to the trailing edge segment (112, 112').

2. The rotor blade as claimed in claim 1,
**characterized in that** in each case at least one slot-like air inlet and/or air outlet (24, 24', 26, 26') is arranged on the pressure-side and suction-side surface (4, 6) of the rotor blade (108).

3. The rotor blade as claimed in claim 2,
**characterized in that** the air inlet (24) is arranged on the pressure-side surface (6) of the rotor blade (108), and the air outlet (26) is arranged on the suction-side surface (4) of the rotor blade.

4. The rotor blade as claimed in at least one of claims 1 to 3,
**characterized in that** the air inlet and/or air outlet (24, 24', 26, 26') extend or extends substantially over the entire length of the trailing edge segment (112, 112').

5. The rotor blade as claimed in at least one of claims 1 to 4,
**characterized in that** the trailing edge segment (112, 112') is arranged on the inner blade portion in such a way that an air inlet duct and/or air outlet duct for a directed air flow are or is formed on the air inlet and/or air outlet (24, 24', 26, 26').

6. The rotor blade as claimed in claim 5,
**characterized in that** the air inlet duct and/or outlet duct are or is configured to deflect the air flow in the region of the air inlet and/or air outlet (24, 24', 26, 26') substantially parallel to the respectively adjoining outer surface of the inner blade portion (2).

7. The rotor blade as claimed in at least one of claims 1 to 6,
**characterized in that** the rotor blade (108) has a fan or compressor, wherein the air inlet and the air outlet (24, 24', 26, 26') communicate in a fluid-channeling manner with the fan or compressor for forced air guidance through at least the trailing edge segment (112, 112').

8. The rotor blade as claimed in claim 7,
**characterized in that** the fan or compressor is arranged in the inner blade portion (2) of the rotor blade (108), wherein preferably the inner blade portion (2) has, in its structural body, air passage openings and/or air-channeling ducts for the fluid-channeling connection between the fan or the compressor and the air inlet and/or air outlet (24, 24', 26, 26').

9. The rotor blade as claimed in claim 7,
**characterized in that** the fan or compressor is arranged in the trailing edge segment (112, 112') of the rotor blade (108).

10. The rotor blade as claimed in at least one of claims 1 to 9,
**characterized in that** each trailing edge segment (112, 112') is composed at least of a first and a second segment portion (14, 16, 18, 28, 28', 28").

11. The rotor blade as claimed in at least one of claims 1 to 10,
**characterized in that** the trailing edge segment (112, 112') is connected to the inner blade portion (2) via at least a first and a second fastening element (30, 30'), wherein preferably the fastening elements (30, 30') are arranged at spacings from one another in the rotor blade longitudinal direction.

12. The rotor blade as claimed in claim 11,
**characterized in that** at least one fastening element (30, 30') has at least one ribbed body which stiffens the trailing edge segment (112, 112'), wherein the ribbed body is preferably connected to the outer surface of the inner blade portion (2) and to the inner side of the trailing edge segment (112, 112') via at least one, two or more fastening points.

13. A wind turbine (100) having a tower (102), a nacelle (104) and a rotor (106), **characterized by** at least one rotor blade (108) as claimed in one of claims 1 to 12 that is connected to the rotor (106).

14. A wind farm having a plurality of wind turbines as claimed in claim 13.

## Revendications

1. Pale de rotor (108) pour une éolienne, avec
une section de pale intérieure (2) qui s'étend à partir d'un pied de pale de rotor (1) dans le sens longitudinal de la pale de rotor (108),
un segment de bord de fuite (112, 112') agencé au niveau de la section de pale intérieure (2) pour l'agrandissement de la profondeur de profilé de la pale de rotor le long d'une section dans le sens longitudinal de la pale de rotor,
dans laquelle la pale de rotor (108) présente une surface d'intrados (4) et une surface d'extrados (6) qui sont réalisées respectivement par endroits à partir de parties de la section de pale intérieure (2) et du segment de bord de fuite (112, 112'),
**caractérisée en ce**
**qu'**au moins une entrée d'air et/ou sortie d'air (24, 24', 26, 26') de type à fente s'étendant sensiblement dans le sens longitudinal de la pale de rotor est réalisée sur la surface d'intrados et/ou d'extrados (4, 6) de la pale de rotor (108) directement dans la zone de transition de la section de pale intérieure (2) au segment de bord de fuite (112, 112').

2. Pale de rotor selon la revendication 1,
**caractérisée en ce que** respectivement au moins une entrée d'air et/ou sortie d'air de type à fente (24, 24', 26, 26') est agencée sur la surface d'intrados et d'extrados (4, 6) de la pale de rotor (108).

3. Pale de rotor selon la revendication 2,
**caractérisée en ce que** l'entrée d'air (24) est agencée sur la surface d'intrados (6) de la pale de rotor (108) et la sortie d'air (26) est agencée sur la surface d'extrados (4) de la pale de rotor.

4. Pale de rotor selon au moins l'une quelconque des revendications 1 à 3,
**caractérisée en ce que** l'entrée d'air et/ou la sortie d'air (24, 24', 26, 26') s'étend sensiblement sur la longueur entière du segment de bord de fuite (112, 112').

5. Pale de rotor selon au moins l'une quelconque des revendications 1 à 4,
**caractérisée en ce que** le segment de bord de fuite (112, 112') est agencé au niveau de la section de pale intérieure de telle manière qu'un canal d'entrée d'air ou de sortie d'air pour un écoulement d'air dirigé soit réalisé au niveau de l'entrée d'air et/ou de la sortie d'air (24, 24', 26, 26').

6. Pale de rotor selon la revendication 5,
**caractérisée en ce que** le canal d'entrée d'air ou de sortie d'air est conçu afin de dévier l'écoulement d'air dans la zone de l'entrée d'air et/ou de la sortie d'air (24, 24', 26, 26') sensiblement parallèlement à la surface extérieure respectivement contiguë de la section de pale intérieure (2).

7. Pale de rotor selon au moins l'une quelconque des revendications 1 à 6,
**caractérisée en ce que** la pale de rotor (108) présente un ventilateur ou compresseur, dans laquelle l'entrée d'air et la sortie d'air (24, 24', 26, 26') communiquent de manière à acheminer le fluide avec le ventilateur ou compresseur pour un guidage d'air déplacé à force par au moins le segment de bord de fuite (112, 112').

8. Pale de rotor selon la revendication 7,
**caractérisée en ce que** le ventilateur ou compresseur est agencé dans la section de pale intérieure (2) de la pale de rotor (108), dans laquelle de préférence, la section de pale intérieure (2) présente dans son corps structurel des ouvertures de passage d'air et/ou canaux d'acheminement d'air pour la liaison d'acheminement de fluide entre le ventilateur ou le compresseur et l'entrée d'air et/ou la sortie d'air (24, 24', 26, 26').

9. Pale de rotor selon la revendication 7,
**caractérisée en ce que** le ventilateur ou compresseur est agencé dans le segment de bord de fuite (112, 112') de la pale de rotor (108).

10. Pale de rotor selon au moins l'une quelconque des revendications 1 à 9,
**caractérisée en ce que** chaque segment de bord de fuite (112, 112') se compose d'au moins une première et une seconde section de segment (14, 16, 18, 28, 28', 28").

11. Pale de rotor selon au moins l'une quelconque des revendications 1 à 10,
**caractérisée en ce que** le segment de bord de fuite (112, 112') est relié par le biais d'au moins un premier et un second élément de fixation (30, 30') à la section de pale intérieure (2), dans laquelle de préférence, les éléments de fixation (30, 30') sont agencés à intervalles les uns des autres dans le sens longitudinal de la pale de rotor.

12. Pale de rotor selon la revendication 11,
**caractérisée en ce qu'**au moins un élément de fixation (30, 30') présente au moins un corps de nervure renforçant le segment de bord de fuite (112, 112'), dans laquelle le corps de nervure est de préférence relié par le biais d'au moins un, deux ou plus points de fixation à la surface extérieure de la section de pale intérieure (2) et au côté intérieur du segment de bord de fuite (112, 112').

13. Eolienne (100), avec une tour (102), une nacelle (104) et un rotor (106),
**caractérisée par** au moins une pale de rotor (108) reliée au rotor (106) selon l'une quelconque des revendications 1 à 12.

14. Parc éolien avec plusieurs éoliennes selon la revendication 13.
